# EUROPEAN PATENT APPLICATION

(11) **EP 2 286 911 A1**
(43) Date of publication of application: **23.02.2011**
(21) Application number: 10008627.1
(22) Date of filing: 18.08.2010
(51) Int. Cl.: B01J 20/12, B01J 20/16, C01B 33/40, C02F 1/28, C02F 1/42

(54) **Absorbent and filter unit**

(30) Priority: 19.08.2009 EP 09010654
(71) Applicant: King Abdulaziz City for Science and Technology, Riyadh 114422 (SA)
(72) Inventor: Hafne, Jameel, Dr., Riyadh 114422 (SA); Al-Dayel, Omar, Dr., Riyadh 114422 (SA); Alandis, Nasser, Dr., PO box 2455 Riyadh (SA); Mekhamer, W.K., Dr., PO box 22452 11495 Riyadh (SA); Al-Ejyan, Turky, Riyadh 114422 (SA); Al-Durihim, Abdulrahma, Riyadh 114422 (SA); Al-Raddadi, Salman, Al-Madinah Al-Monawarah (SA)
(74) Representative: Goddar, Heinz J.

(57) **Abstract**

Adsorbent for adsorbing heavy metal ions comprising A) clay comprising 30-40 wt% mont-morillonite, 10-15 wt% kaolinite, 20-25 wt% mica, 5-10 wt% quartz, 4-8 wt% plagioclase, 1-5 wt% dolomite, 4-8 wt% ilmenite, 1-5 wt% gypsum and/or calcite, wherein all percentages are weight percentages based on the total weight of the clay, and/or B) modified clay, obtainable by washing the clay according to A) as follows: combining the clay according to A) with distilled water to provide a suspension, shacking the resulting suspension and then leaving the suspension to settle down, removing the water layer, optionally repeating steps i-iii) once or several times, and removing the modified clay and drying thereof.

## Description

The present invention relates to an adsorbent for adsorbing heavy metal ions, especially from waste water, as well as a filter unit comprising that adsorbent.

Several methods have been employed to remove heavy metal ions from waste water. Such methods include precipitation, flotation, ion exchange, membrane-related processes, electrochemical techniques and biological processes. Low efficiency performance, particularly when used on very small concentrations of heavy metal ions, the necessity of using expensive chemicals in some methods as well as accompanying disposal problems are amongst the drawbacks of these conventional methods.

In regard of its simplicity and high-efficiency characteristics even for a minute amount of heavy metal ions, adsorption is considered as a better technology to remove heavy metal ions from waste water. Here, activated carbon is a well-known adsorbent and has been proven to be useful for the removal of heavy metals.

Nevertheless, the application of activated carbon for waste water treatment is not feasible due to its high price and high cost associated with the regeneration as a result of high-degree of losses in real processes.

Further, activated bentonite is known as an adsorbent which is activated by acid or other chemicals.

Ding et al., Mining Science and Technology 19 (2009) 0489-0492 discloses the use of bentonite having a major mineral composition as given in table 1 of that article for use in the removal of copper from aqueous solutions. The adsorption capacity can still be improved. Further, M.H. Al-Qunaibit et al., Journal of Colloid and Interface Science 283 (2005) 316-321 disclose the use of bentonite for the adsorption of copper ions. The bentonite utilized comprises 64.9 weight percent montmorillonite, 10.6 weight percent kaolinite, 9.5 weight percent geothite, 9.4 weight percent hematite and 5.6 weight percent boehmite. The performance of that bentonite can still be improved.

It is an object of the present invention to provide an adsorbent which overcomes the disadvantages of the prior art, especially to provide an adsorbent showing high efficiency performance particularly when used on very small concentrations of heavy metals, which does not require the addition of expensive chemicals, and is easy to dispose. Further, the adsorbent shall be readily available and cost-efficient.

This object is achieved by an adsorbent for adsorbing heavy metal ions comprising:
A) clay comprising
   - 30-40 wt% montmorillonite
   - 10-15 wt% kaolinite
   - 20-25 wt% mica
   - 5-10 wt% quartz
   - 4-8 wt% plagioclase
   - 1-5 wt% dolomite
   - 4-8 wt% ilmenite
   - 1-5 wt% gypsum and/or calcite,
      wherein all percentages are weight percentages based on the total weight of the natural clay,
      and/or
B) modified clay, obtainable by washing the clay according to A) as follows:
   i) combining the clay according to A) with distilled water to provide a suspension,
   ii) shacking the resulting suspension and then leaving the suspension to settle down,
   iii) removing the water layer,
   iv) optionally repeating steps i-iii) once or several times, and
   v) removing the modified clay and drying thereof.

Preferably the clay comprises:
- 35.2 wt% montmorillonite
- 13.3 wt% kaolinite
- 22.9 wt% mica
- 8.6 wt% quartz
- 6.7 wt% plagioclase
- 3.8 wt% dolomite
- 5.7 wt% ilmenite and
- 3.8 wt% gypsum and/or calcite

In one embodiment in step i) the clay is combined with the 2-3 fold amount of distilled water.

Even preferred in step ii) the resulting suspension is shaken for at least 2 hours and/or then left to settle down for at least 24 hours.

It is further proposed that steps i-iii) are preferably repeated 1, 2 or 3 times.

In a further preferred embodiment the clay in step v) is removed by centrifugation and/or the removed clay is dried in an oven at about 60°C.

Most preferably, the heavy metal ions are selected from Cr, Cu, Co, Fe, Pb, Ni, Ag, Th, U, Sr and Zn.

A further object is achieved by providing a filter unit comprising an inventive adsorbent Even preferred is the use of the inventive adsorbent in a water purification filter. Surprisingly, it was found that an adsorbent substantially based on clay having a specific mineral content and/or modified clay which is obtained by washing the clay with distilled water provides excellent efficiency and adsorbent capacity, is readily available and cost-efficient and can be easily provided without any addition of expensive chemicals. Further, the inventive adsorbent can be disposed without any significant problems and can therefore be considered as environmentally friendly adsorbent. The improved adsorption capacity of the inventive adsorbent is highly remarkable.

The clay used for the adsorbent of the present invention is preferably natural clay and can be, e.g., found in Kholais, Saudi Arabia, an area about 100 km northeast of Jeddah. However, any other clay having the composition as disclosed can be successfully utilized in the present invention.

The mica may have muscovite and/or illite structure. Plagioclase is an important series of tectosilicate minerals within the feldspars family.

Natural clay (LNB) and washed clay (WLB) used as adsorbent of the present invention show much higher metal adsorption capacity compared to other adsorbents.

Clays have been known as good adsorbents because of the existence of several types of active sites on the surface, which include Bronsted and Lewis acid sites, and ion exchange sites. The edge hydroxyl groups have been particularly active for various types of interactions. Bentonite as a specific clay has a net zero layer charge, small negative charge at the broken edges and this has been responsible for providing superior activity to bentonite as an adsorbent.

It was now surprisingly found that a clay having a specific mineral content shows even improved adsorption characteristics.

It was further surprisingly found that the modification of clay by washing it with distilled water has a considerable influence on the structural properties and enhances the adsorption capacity compared to the expensive activated carbon.

The adsorbent according to the present invention can be used as follows:
- natural or grinded. A natural clay can be advantageously used in order to reduce the costs of the adsorbent.
- coated on beads, for example on alginate beads or any other form. This form will solve the problem of bentonite swelling.
- with any polymer. This form will also solve the problem of bentonite swelling.
- with any hydrogel. When dry bentonite is placed in water, it is able to take up water molecules by adsorbing the molecules in the interlayer region, leading to swelling of bentonite. After the addition of salt to a bentonite suspension, gel formation is caused by attractive forces between particles when the van der Wals attraction dominates the electrostatic repulsion (attractive gel).
- with iron oxide or any other oxide. The use of the adsorbent together with iron oxide or any other oxide, with any element or compound, leads to increasing activation of the adsorbent surface to be able to adsorb a large amount of heavy metals.
- even with ionizing radiation for strengthening their surfaces or for any other purposes, such as sterilization.

It is a significant advantage of the inventive adsorbent that clay without any modification can be used and/or modified clay which can be modified without any expensive chemicals. It is assumed that a modified adsorbent is substantially free of any salts and impurities.

Additional advantageous and features of the subject-matter of the present invention will now become apparent from the following detailed description of preferred embodiments in combination with the accompanying drawings. It is to be understood that, of course, the invention is not to be restricted thereon.
Figure 1 shows a FTIR spectrum of clay having the mineral content as illustrated below;
Figure 2 illustrates the FTIR spectra of modified clay as prepared in example 1;
Figure 3 shows the FTIR spectra of clay having adsorbed thereon chromium ions;
Figure 4 illustrates a schematic diagram of a packed bed column filled with inventive adsorbent to be used as a filter unit for adsorption of heavy metal ions; and
Figure 5 illustrates the adsorption capacity of natural clay (LNB) and modified clay (WLB) for several heavy metals. The adsorption capacity was measured at a temperature of 25°C.

The FTIR spectra were obtained using an IR prestige-21FTIR-8400S Shimadzu spectrophotometer (Shimadzu, Japan). For each sample, 32 scans in the 4000-400 cm⁻¹ spectral range were recorded with a resolution of 4 cm⁻¹.

### Example 1 - Preparation of modified clay

Clay of the following composition was used for this modification:
35.3 wt% montmorillonite, 13.3 wt% kaolinite, 22.9 wt% mica (muscovite and/or illite), 8.6 wt% quartz, 6.7wt% paljoclase Feldspars, 3.8 wt% dolomite, 5.7 wt% ilmenite, and 3.8 wt% gypsum and/or calcite. This clay is a natural clay from Kholais, Saudi Arabia.
200 g of this natural clay is mixed with 500 ml of distilled water. The clay suspension obtained is shaken well for about two hours and then left to settle down for about 24 hours. Subsequently, the water layer is removed. Above steps are repeated three times. After that, the modified clay is removed by centrifugation, and finally, the modified clay obtained is dried at 60°C in an oven.

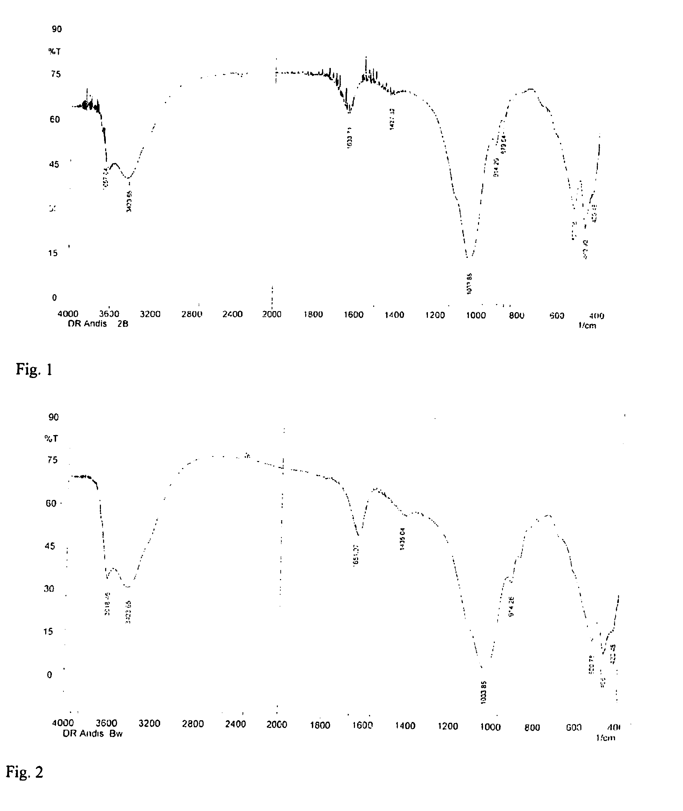

Figure 1 shows the FTIR spectra of natural clay. The adsorption band at 3657 cm⁻¹ is due to the stretching vibrations of structural OH groups coordinated to Al-Al pair, the complex broad band around 1033 cm⁻¹ corresponds to Si-O stretching and the 520, 462 and 420 cm⁻¹ triplet is related to the Al-O-Si, Si-O-Si, and Si-O deformations. Adsorbed water gives a broad band at 3423 cm⁻¹ corresponding to the H₂O-stretching vibrations.
Figure 2 shows the FTIR spectra of modified clay according to example 1. The adsorption band at 3618 cm⁻¹ is due to the stretching vibrations of structural OH groups coordinated to Al-Al pair, the complex broad band around 1033 cm⁻¹ corresponds to Si-O stretching and the 520, 466 and 420 cm⁻¹ triplet is related to the Al-O-Si, Si-O-Si, and Si-O deformations. Adsorbed water gives a broad band at 3423 cm⁻¹ corresponding to the H₂O-stretching vibrations.

### Example 2 - Use of modified clay prepared according to example 1 as adsorbent for adsorbing chromium(III).

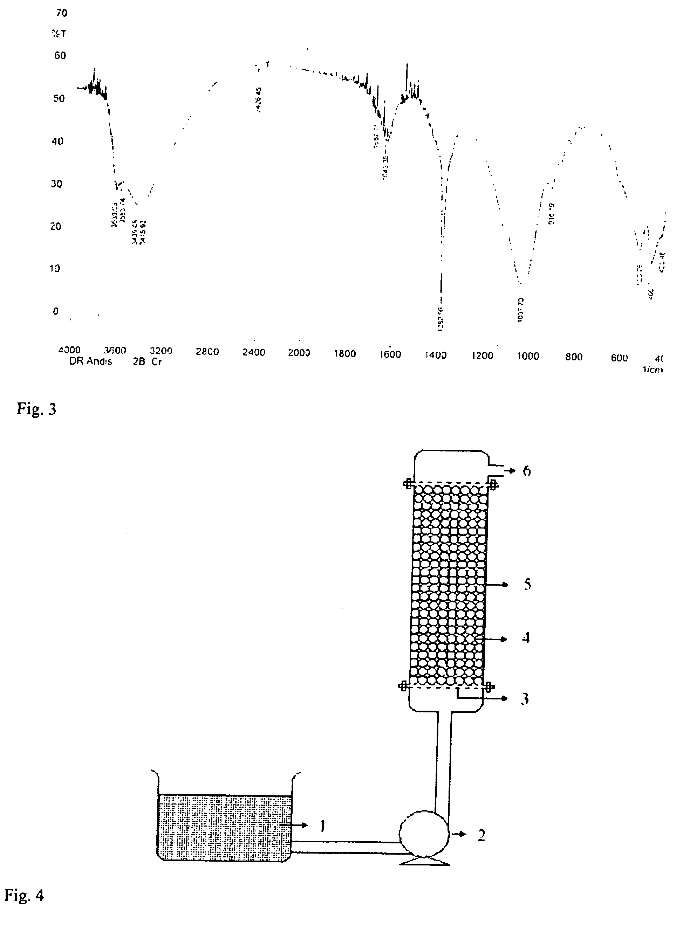

In example 2, a packed bed column 5 consisting of a cylindrical Perspex column of 1.5 cm diameter and 33 cm in height was used in the adsorption studies for the removal of chromium. The column is illustrated in Figure 4 and comprises a reservoir 1 containing a solution of chromium(III) ions, a peristaltic feed pump 2, cotton plugs 3, alginate beads 4 coated with modified clay as prepared in example 1, and an effluent outlet 6.

The alginate beads 4 coated with modified clay have a diameter of 0.24 cm. In the column 5 cotton plugs 3 are provided at the bottom and top of the column to retain the beads therein. An aqueous metal ion solution of Cr(III) was pumped in an upward direction through the column 5 by the peristaltic pump 2 at known flow rate (10 ml/29 seconds). The residence time was varied from 5 minutes to 24 hours. Respective samples were taken at pre-determined time intervals, and the concentrations of unabsorbed metal ions were measured using a Perkin-Elmer Optima 5300DV ICP optical emission spectrometer coupled with a peristaltic pump and an AS-93 plus auto sampler unit. Best results were achieved after a residence time of 16 minutes. The tests were continued for 72 hours to reach the saturated point.

Further, an identical experiment was carried out using natural clay.

After 15 minutes in contact, an amount of retained Cr(III) was 11.6 mg Cr/g for natural clay, whereas an amount of retained Cr of 25.0 mg Cr/g was found when using the modified clay.

The FTIR spectra of natural clay loaded with Cr(III) ions is shown in Figure 3. The adsorption band at 3630 cm⁻¹ is due to the stretching vibrations of structural OH groups coordinated to Al-Al pair, the complex broad band around 1037 cm⁻¹ corresponds to Si-O stretching and the 520, 466 and 420 cm⁻¹ triplet is related to the Al-O-Si, Si-O-Si, and Si-O deformations. Adsorbed water gives a broad band at 3415 cm⁻¹ corresponding to the H₂O-stretching vibrations. The width and complexity of the band at 1382 cm-1 can be attributed to the presence of chromium salts such as hydroxides and carbonates solid phases.

### Example 3: Adsorption of different heavy metal ions

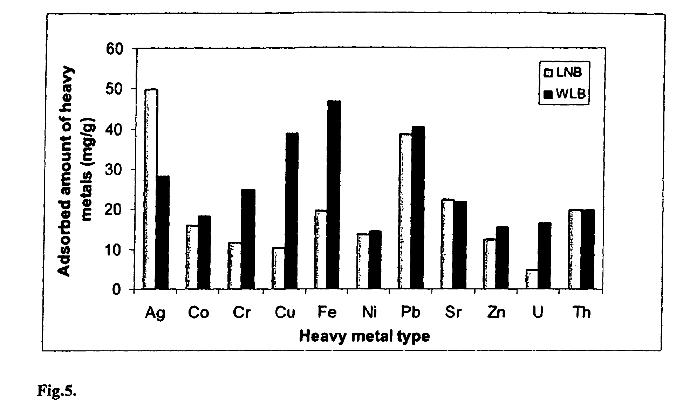

Using the column as illustrated in Figure 4, adsorption experiments were also conducted for other heavy metal ions in a manner as illustrated in example 2. The adsorption capacity of natural clay (NB) and modified clay (WB) for these heavy metal ions is illustrated in Figure 5 and Table 1:

**Table 1**

| | NB | WB |
|---|---|---|
| Zn | 12.4 | 15.5 |
| Fe | 19.6 | 46.9 |
| Cu | 10.5 | 38.8 |
| Ag | 49.9 | 28.3 |
| Cr | 11.6 | 25.0 |
| Pb | 38.7 | 40.3 |
| Sr | 22.4 | 21.8 |
| Co | 16.1 | 18.3 |
| Ni | 14.4 | 13.7 |
| Th | 19.9 | 19.9 |
| U | 11.2 | 16.6 |

### Example 4: Comparative tests

In the following tables 2 and 3, comparative studies for the adsorbed amount of Ni(II) and Cu(II) on montmorillonite and an adsorbent comprising natural bentonite (without modification) according to the present invention are provided, respectively. The montmorillonite results were taken from Christianah Olakitan Ijagbemi, Mi-Hwa Baek, Dong-Su Kim, Montmorillonite surface properties and sorption characteristics for heavy metal removal from aqueous solutions Journal of Hazardous Materials, Volume 166, Issue I, pages 538-546.

**Table 2. Comparative studies for adsorbed amount of Ni(II) on montmorillonite and natural bentonite**

| Initial concentration of Ni(II) (mg/L) | Adsorbed amount ofNi(II) by montmorillonite (mg/g) | Adsorbed amount ofNi(II) by natural adsorbent of the invention (mg/g) |
|---|---|---|
| 100 | 3.11 | 7.8 |
| 200 | 5.68 | 11.9 |
| 300 | 5.61 | 14.5 |

**Table 3. Comparative studies for adsorbed amount of Cu(II) on montmorillonite and natural bentonite**

| Initial concentration of Cu(II) (mg/L) | Adsorbed amount of Cu(II) by montmorillonite (mg/g) | Adsorbed amount of Cu(II) by natural adsorbent of the invention (mg/g) |
|---|---|---|
| 100 | 2.8 | 8.03 |
| 200 | 4.25 | 10.7 |
| 300 | 4.42 | 12.5 |

In a further test, the adsorption capacity of different adsorbents of the prior art and of the present invention are provided in Table 4. The test is based on the adsorption capacity of Cu(II) and was conducted in the same manner as explained in example 2, with use of the respective adsorbent material.

**Table 4.Adsorption capacity of Cu(II) for various adsorbents:**

| Adsorbents | Temperature | qm(mg/g) | References |
|---|---|---|---|
| Activate Carbon | 20 | 3.56 | 1 |
| Grafted silica | 20 | 16.57 | 2 |
| Natural zeolites | 30 | 8.79 | 1 |
| Silica | 20 | 2.3 | 2 |
| | | | |
| Aluminas | 25 | 8.55 | 3 |
| | | | |
| Natural clay | 25 | 10.5 | inventive |
| | 35 | 12.7 | inventive |
| | 40 | 17.7 | inventive |
| Modified clay | 25 | 38.8 | inventive |

| | | | |
|---|---|---|---|
| 1. Machida, M., Aikawa M., and Tatsumoto, H., Prediction of simultaneous adsorption of Cu(II) and Pb(II) onto activated carbon by conventional Langmuir type equations J Hazard. Mater. B 120 (2005), pp. 271-275. 2. Ciron N., Guilet R., and Deydier E., Adsorption of Cu(II) and Pb(II) onto a grafted silica: isotherms and kinetic models, Water Res. 37 (2003) p. 3079-3086 3. Rengaraj S., Kim Y., Joo C.K. and J. Yi J., Removal of copper from aqueous solution by aminated and protonated mesoporous aluminas: kinetics and equilibrium J. Colloid Interf. Sci. 273 (2004), pp. 14-21. | | | |

The features disclosed in the foregoing description, the claims and the drawings may, both separately and in any combination thereof, be material for realizing the invention in diverse forms thereof.

## Claims

1. Adsorbent for adsorbing heavy metal ions comprising:
A) clay comprising
- 30-40 wt% montmorillonite
- 10-15 wt% kaolinite
- 20-25 wt% mica
- 5-10 wt% quartz
- 4-8 et% plagioclase
- 1-5 wt% dolomite
- 4-8 wt% ilmenite
- 1-5 wt% gypsum and/or calcite,
wherein all percentages are weight percentages based on the total weight of the clay,
and/or
B) modified clay, obtainable by washing the clay according to A) as follows:
i) combining the clay according to A) with distilled water to provide a suspension,
ii) shacking the resulting suspension and then leaving the suspension to settle down,
iii) removing the water layer,
iv) optionally repeating steps i-iii) once or several times, and
v) removing the modified clay and drying thereof.

2. Adsorbent according to claim 1, wherein the clay comprises:
- 35.2 wt% montmorillonite
- 13.3 wt% kaolinite
- 22.9 wt% mica
- 8.6 wt% quartz
- 6.7 wt% plagioclase
- 3.8 wt% dolomite
- 5.7 wt% ilmenite and
- 3.8 wt% gypsum and/or calcite

3. Adsorbent according to claim 1 or 2, wherein in step i) the clay is combined with the 2-3 fold amount of distilled water.

4. Adsorbent according to any of the preceding claims, wherein in step ii) the resulting suspension is shaken for at least 2 hours and/or then left to settle down for at least 24 hours.

5. Adsorbent according to any of the preceding claims, wherein steps i-iii) are repeated 1, 2 or 3 times.

6. Adsorbent according to any of the preceding claims, wherein the clay in step v) is removed by centrifugation and/or the removed clay is dried in an oven at about 60°C.

7. Filter unit comprising an adsorbent according to any of the preceding claims 1 to 6.

8. Use of the adsorbent according to any of the claims 1 to 6 in a water purification filter.
